# EUROPEAN PATENT SPECIFICATION

(11) **EP 2 693 715 B1**
(45) Date of publication and mention of the grant of the patent: **12.06.2019**
(21) Application number: 12305956.0
(22) Date of filing: 02.08.2012
(51) Int. Cl.: H04L 29/06, H04L 12/26

(54) **A system and a method for detecting cheating applications**
System und Verfahren zur Detektion von betrügerischen Anwendungen
Système et procédé de détection de fraude dans des applications

(43) Date of publication of application: 05.02.2014
(73) Proprietor: Alcatel Lucent, 91620 Nozay (FR); INRIA, 78153 Le Chesnay (FR)
(72) Inventor: Noirie, Ludovic, 91620 Nozay (FR); Jaber, Mohamad, 69009 Lyon (LB); Goncalves, Paulo, 69009 Lyon (PT)
(74) Representative: Nokia EPO representatives

(56) References cited:
- US-A1- 2011 040 706
- US-B1- 6 917 588
- GEZA SZABO ET AL: "Accurate Traffic Classification", WORLD OF WIRELESS, MOBILE AND MULTIMEDIA NETWORKS, 2007. WOWMOM 2007. IEEE INTERNATIONAL SYMPOSIUM ON A, IEEE, PI, 1 June 2007 (2007-06-01), pages 1-8, XP031149164, ISBN: 978-1-4244-0992-1

## Description

### FIELD OF THE INVENTION

The present invention generally relates to the technical field of IP traffic flow classification, and more particularly to a system and a method for detecting cheating application.

### BACKGROUND OF THE INVENTION

As used herein, the term "application" has a broad and not restrictive meaning, and hereby includes any device or software managing data to be carried over a communications link, for a specific purpose, in the form of packet flow such as messaging, streaming, instant messaging, P2P, ftp, VoIP.

Different techniques have been developed in order to detect or to classify applications carried by packet flows over communications networks, such as by means of Deep Packet Inspection, protocol decoding methods, port-based methods, or on the basis of flow features as do signature-based methods, supervised/unsupervised machine learning methods or, more generally, behavioral analysis methods.

Such IP traffic flow classification may be deployed for various purposes such as for mapping network traffic to different QoS classes, for fair network resources sharing, or for traffic flow monitoring.

Current flow features-based classification methods, provide satisfactory classification performance as it can be noticed from the following documents: L. Bernaille, et al., "Early application identification", in ADETTI/ISCTE CoNEXT Conference, December 2006; M. Jaber et al., "Enhancing application identification by means of sequential testing" in Networking, Aachen Germany, 2009.

However, one common weakness of known flow features-based classification methods is their vulnerability to cheating by applications. Indeed, an application may be intentionally configured to mimic the behavior or be assigned the features of other ones, misleading by the way flow feature-based classifiers (A. Locavazzi et al., "Optimum packet length masking" in the 22nd International Teletraffic Congress (ITC), 2010 - C. Kiraly et al., "Traffic masking in Ipsec: architecture and implementation" in the 16th mobile and wireless communications summit, 2007).

The term "cheating" is used broadly to include any obstructive or excessive behavior that a user uses to gain an unfair advantage (for example to get more bandwidth) or to achieve an unauthorized target with respect of specifications fixed by a certain application, the network operator, the service provider and/or the network administrator.

As a matter of fact, with an ever increasing number of application types (such as online games, VoIP, downloading, audio/video streaming, FTP, Messaging, Instant Messaging, Web, IPTV, P2P, VoD) giving rise to varied forms of cheating, the detection/unmasking of cheating applications is becoming more and more complicated, wherein almost all flow features-based classifiers fails.

One object of the present invention is to improve existing techniques for online/offline traffic flow classification so as to detect cheating applications.

Another object of the present invention is to overcome the current failure of IP traffic flow classifiers to detect cheating by malicious and resource-greedy applications.

US 6 917 588 B1 discloses apparatus and methods used for classification of data packet flows.

US 2011/040706 A1 discloses classification of traffic in a packet network.

XP031149164, World of Wireless, Mobile and Multimedia Networks, 2007, WoWMoM 2007, IEEE International Symposium on a, 20070601 IEEE, Pi - ISBN 978-1-4244-0992-1 ; ISBN 1-4244-0992-6, discloses accurate traffic classification.

Another object of the present invention is to consolidate the confidence in IP traffic flow classification results.

### SUMMARY OF THE INVENTION

The invention is defined in the appended independent claims.

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for classifying an IP traffic flow comprising the following steps:
- a computation step of at least a first feature and a second feature of an incoming flow;
- a first classification step of the said incoming flow depending on the first feature;
- a second classification step of the said incoming flow depending on the second feature;
- an estimation step of a traffic class to which said incoming flow belongs by comparing results of the first classification step to results of the second classification step.

In accordance with a broad aspect, the results of the first classification step and the results of the second classification step, respectively, comprise a confidence level on the returned classification result.

In accordance with another broad aspect, the above methods further comprise a training step to estimate a traffic class by comparing results of the first classification step to results of the second classification step.

In accordance with another broad aspect, incoming flow is declared as belonging to a cheating application traffic class whenever the results of the first classification step disagree with the results of the second classification step.

In accordance with another broad aspect, the above methods further comprise a detection step of a not-yet-classified incoming flow on the basis of at least one criterion selected from the group comprising the IP source, the IP destination, the source port, the destination port, the protocol identifier.

In accordance with another broad aspect, the first feature is selected among the group comprising packet length statistics, packet inter-arrival time statistics, packet rate, flow size, flow duration, the first feature being different from the second feature.

In accordance with another broad aspect, the second feature is selected among the group comprising packet length statistics, packet inter-arrival time statistics, packet rate, flow size, flow duration, the second feature being different from the first feature.

Various embodiments relate to systems for classifying an IP traffic flow comprising:
- at least one flow analyser configured to compute a first feature and a second feature of an incoming flow;
- a first flow classifier configured to classify the said incoming flow depending on the first feature;
- a second flow classifier configured to classify the said incoming flow depending on the second feature;
- an aggregator configured to estimate a traffic class to which said incoming flow belongs, by comparing results of the first flow classifier to results of the second flow classifier.

In accordance with a broad aspect, the aggregator is trained to estimate a traffic class by comparing results of the first flow classifier to results of the second flow classifier.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

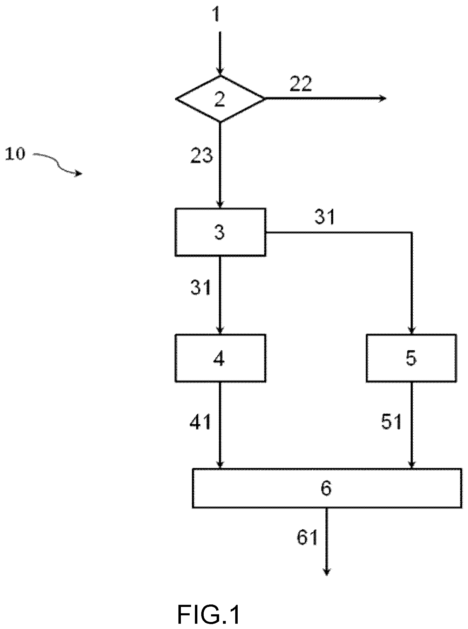

The objects, advantages and other features of the present invention will become more apparent from the following disclosure and claims. The following non-restrictive description of preferred embodiments is given for the purpose of exemplification only with reference to the accompanying drawing in which FIG.1 is a schematic diagram illustrating functional components according to one embodiment.

### DETAILED DESCRIPTION OF ILLUSTRATIVE EMBODIMENTS

Flow classification is generally based on computed (i.e. measured or estimated) flow features (characteristics) with respect to a set of fix and/or variable parameters defining different classes. These sets of parameters range from simple to complex and depend on the used flow classification method.

Flow features are descriptive information that can be calculated from one or more packets and may be used to differentiate between different application types. As examples of such flow features, one can mention the packet length statistics, the packet inter-arrival time statistics (such as average, minimum, maximum, standard deviation, or distribution), the packet payload, packet rate, the flow size (bytes), the flow duration.

On another note, cheating alters, in a way or another, only one feature, or more generally a very limited number of features, of a given flow. Indeed, while cheating, it is rare and difficult to play simultaneously on a plurality of flow features. For example, a network entity (for example, a router) or a software module may cheat a given flow with fake packet sizes or, alternatively, with fake packet inter-arrival times (and rarely both).

To detect such cheating applications, it is provided a system **10** for IP traffic flow classification, comprising at least two flow features-based classifiers **4-5**, each one of these flow features-based classifiers using at least a flow feature different (notably, independent) from those which are used by the other flow feature-based classifiers. For example, the flow features-based classifier **4** uses the packet size statistics (average, distributions for example), and the flow features-based classifier **5** uses the inter-packet times statistics (average, standard deviation, distribution for example).

It is worth noting that the system **10** for IP traffic flow classification may comprise a plurality of flow features-based classifiers **4-5**, namely three, four or even more, each flow features-based classifier **4** being based on at least one flow feature which is not used by the other flow classifiers **5.** Preferably, these flow classifiers **4-5** operate in a parallel manner.

These flow features-based classifiers **4-5** may be chosen from known features-based classifiers that can be found in the prior art (A. Moore and K. Papagiannaki, "Toward the accurate identification of network applications", in PAM, October 2005, N. Williams et al., "A Preliminary Performance Comparison of Five Machine Learning Algorithms for Practical IP Traffic Flow Classification", ACM SIGCOMM Computer Communication Review, Volume 36, Number 5, October 2006).

The system **10** for IP traffic flow classification further comprises a flow detector **2** which is configured to detect from an incoming flow **1** if it has already been classified or not. It follows that already classified flow **22** is released and does not undergo the following steps, whereas the not-yet-classified flow **23** is forwarded to a flow analyser **3.**

The not-yet-classified flow **23** may be identified on the basis, for example, of one or more of the following detection criteria: IP source, IP destination, source port, destination port, protocol identifier, or any header flag. It is to be noted that the incoming flow **1** may be taken from live capturing or from previously captured traffic traces.

The flow analyser **3** is configured to compute and provide relevant features **31** (which may be independent) characterizing the not-yet-classified flow **23.** These features **31** include, for example, packet size statistics (such as, minimum, maximum, average, standard deviation), packet inter-arrival time statistics (such as distribution, average, standard deviation), packet rate, flow duration.

The obtained relevant features **31** characterizing the not-yet-classified flow **23** are communicated to each one of the flow features-based classifier **4-5**, according to their respective requirements.

The flow features-based classifiers **4-5** output their respective classification results **41**, **51** in view of the relevant features **31** communicated thereto.

In one embodiment, the flow classifiers are further configured to output their respective classification results **41-51** with the classification confidence level that each one has on its classification result.

An aggregator **6** is configured to retrieves the results of all the flow features-based classifiers **4-5** and compares them in order to estimate the application (i.e. the traffic class) to which the incoming traffic **1** belongs. The final classification results **61** will be the classification of the incoming flow **1** (i.e. the not-yet-classified flow **23**) with the class of traffic (including a "cheating application" class), with optionally a confidence indicator. As illustrative examples;
- the flow features-based classifier **4** and the flow features-based classifier **5** are both well confident for a given class X (for example, media streaming, Instant Messaging, Web, IPTV, or online game) of the incoming flow **23.** Then, the final classification result **61** is class X of the incoming flow 1 with high confidence;
- the flow feature-based classifier **4** is well confident for class X, the flow classifier **5** find Y (different from X) with low confidence. Then, the final classification result **6** is class X with low confidence and a notification of a potential cheating;
- the flow features-based classifier **4** is well confident for class X, the flow features-based classifier **5** is well confident for class Y. (i.e. the classification results outputted by the flow features-based classifier **4** disagree with the classification results outputted by flow features-based classifier **5**). Then, the final classification result **61** is "cheating application" with high confidence.

In other words, if a strong difference is detected between the outputs of the flow feature-based classifiers **4-5**, the application carried by the flow **23** is declared cheating, and the network will process this flow according to the rules decided in such a case, by the network operator or the service provider.

More generally, "cheating application" distinction is based on the difficulty to cheat in the same direction with two classifiers **4-5** looking at different and independent flow features (characteristics). Accordingly, the flow of a cheating application generally exhibits only one feature different from those defining the true traffic class to which this flow belongs. Hence, the comparison of classification results of at least two flow classifiers, each one being based on at least one feature different from the one of the other flow classifiers(s), permits to detect cheating applications.

It is to be noted that, both flow features-based classifiers **4** and **5**, may be trained in accordance with classical training procedures to get and update their own classifying rules (M. Jaber et al., "Enhancing application identification by means of sequential testing" in Networking, Aachen Germany, 2009).

In one embodiment, a training procedure is applied to the aggregator **6**, by off-line testing different cheating techniques for different applications or different particularly conceived traffic flow patterns, in order to estimate a traffic class by comparing the classification results returned by the flow classifiers **4-5.** In fact, the aggregator **6** may be trained to estimate the relationship between the confidence levels of each flow features-based classifier **4-5** and the fact that the flow is really cheating or that the deviation to the average behavior is only due to statistical variations.

Advantageously, the above-described method and system for detection cheating application permit
- to identify common cheating forms, including unexpected ones (i.e. those that are not anticipated);
- to amend communications protocols and applications conception by correcting misconceptions, vulnerability and bugs which are exploited for cheating.

## Claims

1. A method for classifying an IP traffic flow comprising the following steps - a computation step of at least a first feature and a second feature of an incoming flow (1); - a first classification step of the said incoming flow (1) depending on the first feature; a second classification step of the said incoming flow (1) depending on the second feature; - an estimation step of a traffic class to which belongs the said incoming flow (1) by comparing results of the first classification step to results of the second classification step; - a distinction step of cheating application, wherein said cheating application is a device or software managing data to be carried over a communications link in the form of a packet flow using obstructive or excessive behavior to gain an unfair advantage or to achieve an unauthorized target with respect to specifications fixed by a certain application, by detecting the differences between results of the first classification step and results of the second classification step, wherein the class of a traffic class to which belongs the said incoming flow (1) is cheating application if the results of the first classification step disagree with the results of the second classification step.

2. The method of claim 1, wherein the results of the first classification step and the results of the second classification step, respectively, comprise a confidence level on the returned classification result.

3. The method of claim 1 or 2, further comprising a training step to estimate a traffic class by comparing results of the first classification step to results of the second classification step.

4. The method of any of the preceding claims, wherein the first feature is selected from the group comprising packet length statistics, packet inter-arrival time statistics, packet rate, flow size, flow duration, the first feature being different from the second feature.

5. The method of any of the preceding claims, wherein the second feature is selected from the group comprising packet length statistics, packet inter-arrival time statistics, packet rate, flow size, flow duration, the second feature being different from the first feature.

6. The method of any of the preceding claims, further comprising, before the computation step, a detection step of a not-yet-classified incoming flow.

7. The method of the preceding claim, wherein the detection step of the not-yet-classified flow is based on at least one criterion selected from the group comprising the IP source, the IP destination, the source port, the destination port, the protocol identifier.

8. A system for classifying an IP traffic flow comprising - at least a flow analyser configured to compute a first feature and a second feature of an incoming flow (1); - a first flow classifier configured (4) to classify the said incoming flow (1) depending on the first feature; - a second flow classifier (5) configured to classify the said incoming flow depending on the second feature; - an aggregator (6) configured to estimate a traffic class to which belongs the said incoming flow (1) by comparing results of the first flow classifier (4) to results of the second flow classifier (5), and configured to distinct cheating application by detecting the differences between results of the first classification step and results of the second classification step, wherein said cheating application is a device or software managing data to be carried over a communications link in the form of a packet flow using obstructive or excessive behavior to gain an unfair advantage or to achieve an unauthorized target with respect to specifications fixed by a certain application, wherein the class of a traffic class to which belongs the said incoming flow (1) is cheating application if the results of the first flow classifier (4) disagree with the results of the second flow classifier (5).

9. The system of claim 8, wherein the aggregator is trained to estimate a traffic class by comparing results of the first flow classifier (4) to results of the second flow classifier (5) .

10. The system any of the Claims 8 to 9, further comprising a flow detector (2) configured to detect a not-yet-classified incoming flow (1).

11. Computer program implemented on a processing unit of a computer, said program including code sections for performing instructions corresponding to the steps of a method according to any of claims 1-7.

## Patentansprüche

1. Verfahren zum Klassifizieren eines IP-Datenverkehrsstroms, das die folgenden Schritte umfasst:
- einen Schritt eines Berechnens mindestens eines ersten Merkmals und eines zweiten Merkmals eines eingehenden Datenstroms (1);
- einen Schritt eines ersten Klassifizierens des eingehenden Datenstroms (1) in Abhängigkeit von dem ersten Merkmal;
- einen Schritt eines zweiten Klassifizierens des eingehenden Datenstroms (1) in Abhängigkeit von dem zweiten Merkmal;
- einen Schritt eines Schätzens einer Datenverkehrsklasse, zu welcher der eingehende Datenstrom (1) gehört, indem die Ergebnisse des Schritts der ersten Klassifizierung mit den Ergebnissen des Schritts der zweiten Klassifizierung verglichen werden;
- einen Schritt eines Unterscheidens einer betrügerischen Anwendung;
wobei die betrügerische Anwendung eine datenverwaltende Vorrichtung oder Software ist, die über eine Datenübertragungsverbindung in der Form eines Datenpaketstroms mithilfe eines blockierenden oder unverhältnismäßigen Verhaltens ausgeführt wird, um einen unfairen Vorteil zu erlangen oder ein nicht autorisiertes Ziel in Bezug auf die von einer bestimmten Anwendung festgelegten Spezifikationen zu erreichen, indem Unterschiede zwischen den Ergebnissen des Schritts der ersten Klassifizierung und den Ergebnissen des Schritts der zweiten Klassifizierung erkannt werden, wobei die Klasse einer Datenverkehrsklasse, zu welcher der eingehende Datenstrom (1) gehört, eine betrügerische Anwendung ist, wenn die Ergebnisse des Schritts der ersten Klassifizierung nicht mit den Ergebnissen des Schritts der zweiten Klassifizierung übereinstimmen.

2. Verfahren nach Anspruch 1, wobei die Ergebnisse des Schritts der ersten Klassifizierung bzw. die Ergebnisse des Schritts der zweiten Klassifizierung einen Vertrauensgrad für das zurückerhaltene Klassifizierungsergebnis umfassen.

3. Verfahren nach Anspruch 1 oder 2, das außerdem einen Schritt eines Lernens zum Schätzen einer Datenverkehrsklasse umfasst, indem die Ergebnisse des Schritts der ersten Klassifizierung mit den Ergebnissen des Schritts der zweiten Klassifizierung verglichen werden.

4. Verfahren nach einem der vorhergehenden Ansprüche, wobei das erste Merkmal aus der Gruppe ausgewählt wird, die aus einer Datenpaketlängenstatistik, einer Statistik einer Zwischenankunftszeit des Datenpakets, einer Datenpaketgeschwindigkeit, einer Datenstrommenge und einer Datenstromdauer besteht, wobei das erste Merkmal verschieden von dem zweiten Merkmal ist.

5. Verfahren nach einem der vorhergehenden Ansprüche, wobei das zweite Merkmal aus der Gruppe ausgewählt wird, die aus einer Datenpaketlängenstatistik, einer Statistik einer Zwischenankunftszeit des Datenpakets, einer Datenpaketgeschwindigkeit, einer Datenstrommenge und einer Datenstromdauer besteht, wobei das zweite Merkmal verschieden von dem ersten Merkmal ist.

6. Verfahren nach einem der vorhergehenden Ansprüche, das außerdem vor dem Schritt des Berechnens einen Schritt eines Erkennens eines noch nicht klassifizierten eingehenden Datenstroms umfasst.

7. Verfahren des vorhergehenden Anspruchs, wobei der Schritt des Erkennens des noch nicht klassifizierten eingehenden Datenstroms auf mindestens einem Kriterium beruht, das aus der Gruppe ausgewählt wird, die aus der IP-Quelle, dem IP-Ziel, dem Quellenanschluss, dem Zielanschluss und der Protokollkennung besteht.

8. System zum Klassifizieren eines IP-Datenverkehrsstroms, umfassend:
- mindestens einen Datenstromanalysator, der konfiguriert ist zum Berechnen eines ersten Merkmals und eines zweiten Merkmals eines eingehenden Datenstroms (1);
- einen ersten Datenstromklassifizierer (4), der konfiguriert ist zum Klassifizieren des eingehenden Datenstroms (1) in Abhängigkeit von dem ersten Merkmal;
- einen zweiten Datenstromklassifizierer (5), der konfiguriert ist zum Klassifizieren des eingehenden Datenstroms in Abhängigkeit von dem zweiten Merkmal;
- einen Aggregator (6), der konfiguriert ist zum Schätzen einer Datenverkehrsklasse, zu welcher der eingehende Datenstrom (1) gehört, indem die Ergebnisse des ersten Datenstromklassifizierers (4) mit den Ergebnissen des zweiten Datenstromklassifizierers (5) verglichen werden, und der konfiguriert ist zum Unterscheiden einer betrügerischen Anwendung, indem die Differenzen zwischen den Ergebnissen des Schritts der ersten Klassifizierung mit den Ergebnissen des Schritts der zweiten Klassifizierung verglichen werden, wobei die betrügerische Anwendung eine datenverwaltende Vorrichtung oder Software ist, die über eine Datenübertragungsverbindung in der Form eines Datenpaketstroms mithilfe eines blockierenden oder unverhältnismäßigen Verhaltens ausgeführt wird, um einen unfairen Vorteil zu erlangen oder ein nicht autorisiertes Ziel in Bezug auf die von einer bestimmten Anwendung festgelegten Spezifikationen zu erreichen, wobei die Klasse einer Datenverkehrsklasse, zu welcher der eingehende Datenstrom (1) gehört, eine betrügerische Anwendung ist, wenn die Ergebnisse des ersten Datenstromklassifizierers (4) nicht mit den Ergebnissen des zweiten Datenstromklassifizierers (5) übereinstimmen.

9. System nach Anspruch 8, wobei der Aggregator trainiert wird zum Schätzen einer Datenverkehrsklasse umfasst, indem die Ergebnisse des ersten Datenstromklassifizierers (4) mit den Ergebnissen des zweiten Datenstromklassifizierers (5) verglichen werden.

10. System nach einem der Ansprüche 8 bis 9, das außerdem einen Datenstromdetektor (2) umfasst, der konfiguriert ist zum Erkennen eines noch nicht klassifizierten eingehenden Datenstroms (1).

11. Computerprogramm, das in einer Datenverarbeitungseinheit eines Computers eingerichtet ist, wobei das Programm Codeabschnitte enthält, um Befehle auszuführen, die den Schritten eines Verfahrens nach einem der Ansprüche 1 bis 7 entsprechen.

## Revendications

1. Procédé permettant de classifier un flux de trafic IP comprenant :
une étape de calcul d'au moins une première caractéristique et d'une deuxième caractéristique d'un flux entrant (1) ;
une première étape de classification dudit flux entrant (1) en fonction de la première caractéristique ;
une deuxième étape de classification dudit flux entrant (1) en fonction de la deuxième caractéristique ;
une étape d'estimation d'une classe de trafic à laquelle appartient ledit flux entrant (1) en comparant les résultats de la première étape de classification aux résultats de la deuxième étape de classification ;
une étape de distinction d'application frauduleuse, ladite application frauduleuse étant des données de gestion par dispositif ou par logiciel devant être acheminées sur une liaison de communication sous la forme d'un flux de paquets en utilisant un comportement d'obstruction ou un comportement excessif pour gagner un avantage abusif ou pour arriver à une fin non autorisée en ce qui concerne des spécifications fixées par une certaine application, en détectant les différences entre les résultats de la première étape de classification et les résultats de la deuxième étape de classification, la classe d'une classe de trafic à laquelle appartient ledit flux entrant (1) étant application frauduleuse si les résultats de la première étape de classification ne concordent pas avec les résultats de la deuxième étape de classification.

2. Procédé selon la revendication 1, dans lequel les résultats de la première étape de classification et les résultats de la deuxième étape de classification, respectivement, comprennent un niveau de confiance sur le résultat de classification retourné.

3. Procédé selon la revendication 1 ou 2, comprenant en outre une étape d'apprentissage destinée à estimer une classe de trafic en comparant les résultats de la première étape de classification aux résultats de la deuxième étape de classification.

4. Procédé selon l'une quelconque des revendications précédentes, dans lequel la première caractéristique est sélectionnée à partir du groupe comprenant des statistiques de longueur de paquet, des statistiques d'intervalle d'arrivée des paquets, un taux de paquets, une taille de flux, une durée de flux, la première caractéristique étant différente de la deuxième caractéristique.

5. Procédé selon l'une quelconque des revendications précédentes, dans lequel la deuxième caractéristique est sélectionnée à partir du groupe comprenant des statistiques de longueur de paquet, des statistiques d'intervalle d'arrivée des paquets, un taux de paquets, une taille de flux, une durée de flux, la deuxième caractéristique étant différente de la première caractéristique.

6. Procédé selon l'une quelconque des revendications précédentes, comprenant en outre, avant l'étape de calcul, une étape de détection d'un flux entrant non encore classifié.

7. Procédé selon la revendication précédente, dans lequel l'étape de détection du flux non encore classifié est basée sur au moins un critère sélectionné à partir du groupe comprenant la source IP, la destination IP, le port source, le port de destination, l'identifiant de protocole.

8. Système permettant de classifier un flux de trafic IP comprenant :
au moins un analyseur de flux configuré pour calculer une première caractéristique et une deuxième caractéristique d'un flux entrant (1) ;
un premier classificateur de flux configuré (4) pour classifier ledit flux entrant (1) en fonction de la première caractéristique ;
un deuxième classificateur de flux (5) configuré pour classifier ledit flux entrant en fonction de la deuxième caractéristique ;
un agrégateur (6) configuré pour estimer une classe de trafic à laquelle appartient ledit flux entrant (1) en comparant les résultats du premier classificateur de flux (4) aux résultats du deuxième classificateur de flux (5), et configuré pour distinguer une application frauduleuse en détectant les différences entre les résultats de la première étape de classification et les résultats de la deuxième étape de classification, ladite application frauduleuse étant des données de gestion par dispositif ou par logiciel devant être acheminées sur une liaison de communication sous la forme d'un flux de paquets en utilisant un comportement d'obstruction ou un comportement excessif pour gagner un avantage abusif ou pour arriver à une fin non autorisée en ce qui concerne des spécifications fixées par une certaine application, la classe d'une classe de trafic à laquelle appartient ledit flux entrant (1) étant application frauduleuse si les résultats du premier classificateur de flux (4) ne concordent pas avec les résultats du deuxième classificateur de flux (5).

9. Système selon la revendication 8, dans lequel l'agrégateur est instruit pour estimer une classe de trafic en comparant les résultats du premier classificateur de flux (4) avec les résultats du deuxième classificateur de flux (5).

10. Système selon l'une quelconque des revendications 8 à 9, comprenant en outre un détecteur de flux (2) configuré pour détecter un flux entrant non encore classifié (1).

11. Programme informatique mis en oeuvre sur une unité de traitement d'un ordinateur, ledit programme comportant des sections de code destinées à exécuter des instructions correspondant aux étapes d'un procédé selon l'une quelconque des revendications 1-7.
